# EUROPÄISCHE PATENTSCHRIFT

(11) **EP 2 500 698 B1**
(45) Veröffentlichungstag und Bekanntmachung des Hinweises auf die Patenterteilung: **12.02.2014**
(21) Anmeldenummer: 11002248.0
(22) Anmeldetag: 18.03.2011
(51) Int. Cl.: G01D 5/34, G01D 5/14

(54) **Vorrichtung und Verfahren zur Messung des Drehwinkels zweier relativ zueinander rotierender Objekte**
Method and device for measuring the relative angle of two objects which can be rotated relative to each other
Dispositif et procédé de mesure de l'angle de rotation de deux objets tournants l'un par rapport à l'autre

(43) Veröffentlichungstag der Anmeldung: 19.09.2012
(73) Patentinhaber: SICK STEGMANN GmbH, 78166 Donaueschingen (DE)
(72) Erfinder: Basler, Stefan, 78086 Brigachtal (DE)
(74) Vertreter: Patentanwälte Westphal, Mussgnug & Partner

(56) Entgegenhaltungen:
- EP-A1- 2 187 178
- DE-A1- 3 522 243
- DE-A1- 10 240 239
- US-A- 2 029 170
- US-A- 3 804 522
- US-B1- 6 577 119

## Beschreibung

Die Erfindung betrifft eine Vorrichtung zur Messung des Drehwinkels zweier relativ zueinander rotierender Objekte gemäß dem Oberbegriff des Anspruchs 1.

Für viele Anwendungen ist es von grundlegender Bedeutung, den Drehwinkel eines rotierenden Objekts zu messen. Im allgemeinen wird dabei der Drehwinkel des rotierenden Objekts relativ zu einem feststehenden, mit einem Maßstab behafteten Objekt gemessen. Beispielsweise kann es sich bei dem rotierenden Objekt um die rotierende Welle eines Motors relativ zu einem feststehenden Maschinenteil sein. Der Maßstab kann dabei sowohl inkrementell als auch absolut sein. Dabei ist es wünschenswert, eine möglichst toleranzunempfindliche Messung der relativen Drehbewegung durchführen zu können, welche jedoch eine hohe Genauigkeit aufweist. Im Idealfall erfolgt die Messung berührungslos, um mechanischen Verschleiß zu vermeiden.

Die EP 2 187 178 A1 offenbart ein Messprinzip unter Ausnutzung der optischen Polarisation von Licht. Zur Messung des Drehwinkels zweier gegeneinander rotierender Objekte sendet ein Sender linear polarisiertes Licht aus. Das Licht tritt durch einen Polarisationsfilter hindurch, der sich gegenüber dem Sender in Abhängigkeit vom Drehwinkel dreht. Die Intensität des durch den Polarisationsfilter durchtretenden Lichts wird durch einen Empfänger gemessen und als Drehwinkel abhängiges Signal ausgewertet.

Die US 3 804 522 offenbart ein ähnliches Messprinzip, bei dem zur Messung des Drehwinkels eines gegenüber einem ersten Objekt rotierten zweiten Objekts ein Sender verwendet wird, der linear polarisiertes Licht aussendet, das durch einen Polarisationsfilter hindurchtritt, der gegenüber dem Sender in Abhängigkeit vom Drehwinkel verdreht ist. Die Intensität wird dann durch einen Empfänger gemessen und als drehwinkelabhängiges Signal ausgewertet.

Nachteilig bei der Verwendung von Polarisation zur Messung des Drehwinkels zweier relativ zueinander rotierender Objekte ist, dass der Drehwinkel mechanisch nicht auf 360° absolut messbar ist, sondern lediglich auf 180°.

Die Aufgabe der Erfindung besteht daher darin, eine verbesserte Vorrichtung zur Messung des Drehwinkels zweier relativ zueinander rotierender Objekte anzugeben, welche insbesondere den Drehwinkel auf 360° absolut bestimmen kann.

Die Aufgabe der Erfindung wird gelöst durch eine Vorrichtung mit den Merkmalen des Patentanspruchs 1.

Die erfindungsgemäße Vorrichtung zur Messung des Drehwinkels zweier relativ zueinander rotierender Objekte, mit einem dem einen Objekt zugeordneten Sender, der Licht aussendet, welches entweder polarisiert ist oder mittels eines Polarisationsfilters polarisiert wird, mit einem polarisationsempfindlichen Analysator, wobei sich der Sender und der Analysator in Abhängigkeit vom Drehwinkel relativ zueinander drehen, und mit einem Empfänger, der die durch den Analysator durchtretende Lichtintensität misst, um ein drehwinkelabhängiges Signal zu erzeugen, zeichnet sich dadurch aus, dass an einem der Objekte ein magnetisiertes Element und an dem anderen der Objekte ein Sensor zur Detektion eines Magnetfelds angeordnet ist. Durch die Verwendung eines magnetisierten Elements wird eine Zusatzinformation bereit gestellt, welche es ermöglicht zu detektieren, ob eine Verdrehung um 180° stattgefunden hat, so dass in Kombination mit der Information hinsichtlich der Polarisation des Lichts insgesamt eine Messung des Drehwinkels über 360° möglich ist. Es wird somit auf einfache Art und Weise ein Absolutdrehgeber bereitgestellt.

Vorzugsweise ist das magnetisierte Element an dem sich drehenden Objekt angeordnet, was einen kostengünstigen Aufbau ermöglicht. Insbesondere kann der Sensor feststehend ausgebildet sein, was einen einfachen konstruktiven Aufbau ermöglicht.

Gemäß einer bevorzugten Ausführungsform der Erfindung ist das magnetisierte Element radial magnetisiert. Derartige magnetisierte Elemente sind einfach und kostengünstig herzustellen.

Gemäß einer besonders vorteilhaften Ausführungsform der Erfindung ist der Sensor als Hall-Sensor ausgebildet. Derartige Sensoren sind kostengünstig und ermöglichen auf einfache Art und Weise die Detektion des Magnetfelds.

Vorteilhafterweise ist das magnetisierte Element. als Trägerfläche für den Analysator ausgebildet, um einen einfachen und kompakten Aufbau zu ermöglichen.

Vorzugsweise ist der Analysator als Polarisationsfolie ausgebildet. Derartige Folien sind kostengünstig herzustellen. Insbesondere bei Anordnung des Analysators auf dem magnetisierten Element können derartige Folien auch auf einfache Art und Weise stabilisiert werden.

Gemäß einer besonders bevorzugten Ausführungsform der Erfindung sind der Empfänger und der Sensor zur Detektion eines Magnetfelds auf einem Halbleiterbauelement ausgebildet, insbesondere auf einem CMOS-ASIC integriert sind, wodurch eine kostengünstige und platzsparende Anordnung möglich wird.

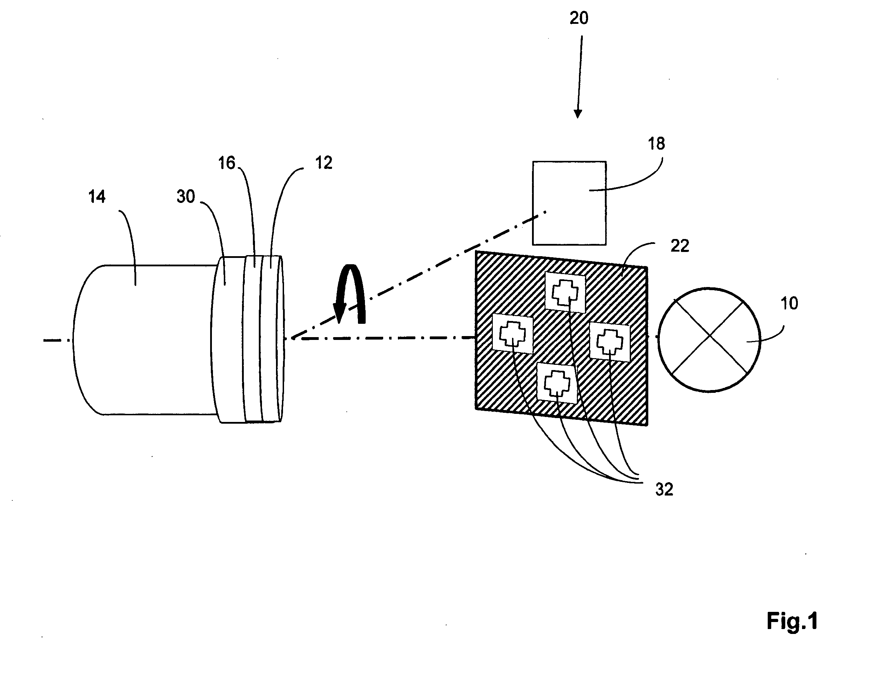

Die Erfindung wird anhand der nachfolgenden Figur ausführlich erläutert. Es zeigt
- Fig. 1: eine schematische Darstellung einer Vorrichtung zur Messung des Drehwinkels zweier relativ zueinander rotierender Objekte gemäß einem Ausführungsbeispiel der Erfindung.

Fig. 1 zeigt eine Vorrichtung zur Messung des Drehwinkels zweier relativ zueinander rotierender Objekte. Dabei ist vorliegend lediglich ein Objekt rotierend ausgebildet, nämlich eine Welle 14 beispielsweise eines Motors, wobei der Drehwinkel der Welle 14 in Bezug zu einem feststehenden Teil, beispielsweise dem Motorgehäuse oder einem feststehenden Maschinenteil, ermittelt werden soll. Die Vorrichtung weist einen Polarisationssensor 20 auf, welcher zumindest eine Lichtquelle 10 und einen Lichtempfänger 18 umfasst, welche feststehend angeordnet ist und beispielsweise dem feststehenden Teil zugeordnet sein kann.

Die Lichtquelle 10 des Polarisationssensors 20 sendet polarisiertes Licht aus und ist beispielsweise als Laser ausgebildet. Alternativ kann auch eine unpolarisierte Lichtquelle verwendet werden, welcher ein Polarisator 22 nachgeordnet ist. In einer weiteren Alternative könnten die Positionen von Lichtquelle 10 und Lichtempfänger 18 vertauscht werden, so dass dann unpolarisiertes Licht ausgesandt wird und vor dem Empfänger 10 ein Polarisator 22 angeordnet ist, so dass der Empfänger 10 nur polarisiertes Licht empfängt.

Der rotierenden Welle 14 ist ein sich mit der Welle 14 drehender Spiegel 16 zugeordnet, vor welchem ein sich ebenfalls mit der Welle 14 drehender Polarisationsfilter 12 angeordnet ist. Abhängig vom Drehwinkel der rotierenden Welle 14 ändert sich die Intensität des Lichts, welches in dem Empfänger des Polarisationssensors 20 detektiert wird, und ist maximal, wenn die Polarisationsebene des polarisierten Lichts der Lichtquelle mit der Polarisationsebene des Polarisationsfilters 12 übereinstimmt, und minimal, wenn die Polarisationsebene des polarisierten Lichts der Lichtquelle 10 senkrecht zur Polarisationsebene des Polarisationsfilters 12 steht. Der Drehwinkel kann somit ohne weitere Hilfsmittel über eine halbe Drehung der Welle 14 gemessen werden.

An der Welle 14 ist weiterhin ein sich mit der Welle 14 drehendes magnetisiertes Element 30 angeordnet. Das magnetisierte Element 30 ist dabei radial magnetisiert. Die beiden magnetischen Pole des magnetisierten Elements 30 sind somit gegenüberliegend angeordnet, so dass mittels eines Sensors 32 zur Detektion eines Magnetfelds eine Umdrehung der Welle 14 um 180° detektiert werden kann. Der Sensor 32 ist dabei derart angeordnet, dass er die optische Funktion des Polarisationssensors 20 nicht beeinträchtigt, aber das Magnetfeld des magnetisierten Elements 20, welches am Ort des Sensors 32 durch die Drehbewegung der Welle 14 moduliert wird, detektieren kann. Insgesamt kann somit bei Auswertung des im Sensor 32 detektierten Magnetfelds und der im Empfänger des Polarisationssensors 20 detektierten Lichtintensität eine Messung des Drehwinkels der Welle 14 über eine ganze Drehung der Welle 14 erfolgen.

Der Polarisationsfilter 12 ist vorzugsweise als Polarisationsfolie ausgebildet und auf dem magnetisierten Element 30 angeordnet.

Der Sensor 32 ist vorzugsweise als Hall-Sensor ausgebildet. Insbesondere ist der Sensor 32 vorzugsweise gemeinsam mit dem Polarisationssensor 20 in ein Halbleiterbauelement, beispielsweise einen CMOS-ASIC, integriert, um eine platzsparende Anordnung zu erreichen.

## Patentansprüche

1. Vorrichtung zur Messung eines Drehwinkels einer Welle (14) in Bezug zu einem feststehenden Teil, mit einem feststehenden Sender, der Licht aussendet, welches entweder polarisiert ist oder mittels,eines Polarisators (22) polarisiert wird, mit einem polarisationsempfindlichen Analysator, wobei sich der Sender und der Analysator in Abhängigkeit vom Drehwinkel relativ zueinander drehen, und mit einem Empfänger (18), der die durch den Analysator durchtretende Lichtintensität misst, um ein drehwinkelabhängiges Signal zu erzeugen,
**dadurch gekennzeichnet, dass** an der rotierenden Welle (14) ein sich mit der Welle (14) drehender Spiegel (16) zugeordnet ist, vor welchem ein sich ebenfalls mit der Welle (14) drehender Polarisationsfilter (12) angeordnet ist, so dass sich abhängig vom Drehwinkel der rotierenden Welle (14) die Intensität des Lichtes, welches detektiert wird, ändert
und dass an der Welle (14) ein sich mit der Welle (14) drehendes magnetisiertes Element (30) angeordnet ist und an dem feststehenden Teil ein Sensor (32) zur Detektion eines Magnetfelds angeordnet ist, wobei durch Auswertung des im Sensor (32) detektierten Magnetfeldes und der im Empfänger (18) detektierten Lichtintensität eine Messung des Drehwinkels der Welle (14) über eine ganze Drehung der Welle (14) erfolgt.

2. Vorrichtung nach Anspruch 1, wobei
das magnetisierte Element (30) an dem sich drehenden Objekt angeordnet ist.

3. Vorrichtung nach einem der vorhergehenden Ansprüche, wobei das magnetisierte Element (30) radial magnetisiert ist.

4. Vorrichtung nach einem der vorhergehenden Ansprüche, wobei
der Sensor (32) als Hall-Sensor ausgebildet ist.

5. Vorrichtung nach einem der vorhergehenden Ansprüche, wobei das magnetisierte Element (30) als Trägerfläche für den Analysator ausgebildet ist.

6. Vorrichtung nach einem der vorhergehenden Ansprüche, wobei der Analysator als Polarisationsfolie ausgebildet ist.

7. Vorrichtung nach einem der vorhergehenden Ansprüche, wobei der Empfänger und der Sensor (32) zur Detektion eines Magnetfelds auf einem Halbleiterbauelement ausgebildet sind, insbesondere auf einem CMOS-ASIC integriert sind.

## Claims

1. Device for measuring the rotating angle of a shaft (14) in relation to a stationary part, with a stationary transmitter which emits light that is either polarized or becomes polarized by means of a polarizer (22), and with a polarization-sensitive analyzer, such that the transmitter and the analyzer rotate relative to each other as dependent on the rotating angle, and with a receiver (18) which measures the intensity of light passing through the analyzer in order to create a signal that is dependent on the rotating angle,
wherein
a mirror (16) is assigned to the rotating shaft (14) which rotates along with the shaft (14) and in front of which a polarization filter (12) is positioned, which also rotates with the shaft (14), so that the intensity of the light which is detected changes with the rotating angle of the rotating shaft (14), and
wherein
a magnetized element (30) is positioned on the shaft (14) and a sensor (32) for detecting a magnetic field is positioned on the stationary part, thus in evaluating the magnetic field detected by the sensor (32) as well as the light intensity detected by the receiver (18) it is possible to measure the rotating angle of the shaft (14) for one entire rotation of the shaft (14).

2. Device according to claim 1,
wherein
the magnetized element is positioned on the rotating object.

3. Device according to one of the preceding claims,
wherein
the magnetized element is magnetized in radial fashion.

4. Device according to one of the preceding claims,
wherein
the sensor is designed as a Hall sensor.

5. Device according to one of the preceding claims,
wherein
the magnetized element is designed as a support surface for the analyzer.

6. Device according to one of the preceding claims,
wherein
the analyzer is designed as a polarization film.

7. Device according to one of the preceding claims,
wherein
the receiver and the sensor for detecting a magnetic field are constructed on a semiconductor element and, in particular, are integrated on a CMOS-ASIC.

## Revendications

1. Dispositif de mesure de l'angle de rotation d'un arbre (14) par rapport à une pièce fixe comportant un émetteur fixe qui émet de la lumière qui est soit polarisée soit polarisée au moyen d'un polariseur (22), et un analyseur sensible à la polarisation, l'émetteur et l'analyseur tournant l'un par rapport à l'autre en fonction de l'angle de rotation, ainsi qu'un récepteur (18) qui mesure l'intensité lumineuse traversant l'analyseur pour produire un signal dépendant de l'angle de rotation, **caractérisé en ce que**
sur l'arbre rotatif (14) est monté un miroir (16) tournant avec l'arbre (14) en amont duquel est monté un filtre de polarisation (12) tournant également avec l'arbre (14) de sorte que l'intensité de la lumière qui est détectée varie en fonction de l'angle de rotation de l'arbre rotatif (14), et, sur l'arbre (14) est monté un élément magnétisé (30) tournant avec l'arbre (14), et, sur la pièce fixe est monté un capteur (32) permettant de détecter un champ magnétique, l'évaluation du champ magnétique détecté dans le capteur (32) et de l'intensité lumineuse détectée dans le récepteur (18) permettant d'effectuer une mesure de l'angle de rotation de l'arbre (14) sur une rotation complète de cet arbre (14).

2. Dispositif conforme à la revendication 1, dans lequel l'élément magnétisé (30) est monté sur l'objet rotatif.

3. Dispositif conforme à l'une des revendications précédentes, dans lequel l'élément magnétisé (30) est magnétisé radialement.

4. Dispositif conforme à l'une des revendications précédentes, **caractérisé en ce que**
le capteur (32) est réalisé sous la forme d'un capteur à effet Hall.

5. Dispositif conforme à l'une des revendications précédentes, dans lequel l'élément magnétisé (30) est réalisé sous la forme d'une surface support pour l'analyseur.

6. Dispositif conforme à l'une des revendications précédentes, dans lequel l'analyseur est réalisé sous la forme d'un film polarisant.

7. Dispositif conforme à l'une des revendications précédentes, dans lequel le récepteur et le capteur (32) sont réalisés pour permettre la détection d'un champ magnétique sur un composant semi-conducteur, et en particulier sont intégrés sur un composant CMOS-ASIC.
